# EUROPEAN PATENT APPLICATION

(11) **EP 4 838 094 A1**
(43) Date of publication of application: **11.11.2026**
(21) Application number: 25472016.2
(22) Date of filing: 08.05.2025
(51) Int. Cl.: F03G 7/10

(54) **SYSTEM AND METHOD FOR THE GENERATION OF REACTION LESS DRIVING FORCE OVER OBJECT WITHOUT OF THE MASS LOSS**

(71) Applicant: Vassilev, Ivaylo Trendafilov, 1387 Sofia (BG); Todorov, Georgi Dimitrov, 1124 Sofia (BG); Association "National Centre of Excellence Mechatronics and Clean Technologies", 1700 Sofia (BG); Sofronov, Yavor Petrov, 1700 Sofia (BG); Kamberov, Konstantin Hristov, 1680 Sofia (BG); Dimitrov, Konstantin Lyubomirov, 1750 Sofia (BG)
(72) Inventor: Vassilev, Ivaylo Trendafilov, 1387 Sofia (BG); Todorov, Georgi Dimitrov, 1124 Sofia (BG); Sofronov, Yavor Petrov, 1700 Sofia (BG); Kamberov, Konstantin Hristov, 1680 Sofia (BG); Dimitrov, Konstantin Lyubomirov, 1750 Sofia (BG)
(74) Representative: Benatov, Samuil Gabriel

(57) **Abstract**

A system and method for generating a force from a pressure difference applied to at least one closed thermodynamic two-phase liquid-gas system in a closed volume via surfaces and capillary transport of the liquid phase to provide a driving force to an object without the presence of a reaction and without loss of mass. The applied pressure difference created by a temperature field that creates zones of evaporation and condensation causes a resultant pressure force applied to at least one surface of the liquid phase with a variable axial projection of its area. The asymmetries in the resulting force vectors of the applied pressure causes a net of resultant total vector force acting on the object, the magnitude of which is a function of the geometry - shape and dimensions of the surfaces at the interface between the gas and liquid phases determined by the capillary effect, the applied pressure and the capillary constant of any material of the surface for transporting the liquid phase. The system can be used to provide a driving force to an object.

## Description

### FIELD OF THE INVENTION

The field of the invention relates generally to systems and methods for providing forces on objects without the presence of a reaction. Such forces are generated as a result of unbalanced pressure differences across phase surfaces in such a way as to generate resultant forces on the object without the presence of a reaction. The invention develops methods for systems that use such forces in their specific applications on objects without the presence of a reaction. One of the many example that uses of such forces is the need to provide a driving force on an object located in a vacuum.

### BACKGROUND OF THE INVENTION

### Context

The elimination of complex systems, such as machines used to convert energy into motion has great potential to provide cost savings and to reduce significantly their weight and volume compared to prior art systems. The elimination of complex systems for converting energy into motion without the presence of a reaction is particularly desirable, for example, in the case of self-propelled vehicles such as spacecraft, aircraft and watercraft. For example, the mass of a body or object to be accelerated is the most important parameter of a spacecraft. In order to propel a spacecraft in space (i.e. in a vacuum), or to counteract external influences such as gravitational forces, spacecraft must carry with them all the reactive mass, the energy of propulsion of the reactive mass and the mechanical structure of the reactive mass acceleration systems to generate physical thrust. In prior art systems, physical impulse can be transferred to a spacecraft solely by releasing mass accelerated to high velocities, most often in the form of a gas. This impulse over time accelerates the spacecraft and accomplishes the desired task. Again, as an example, commercial satellites typically use 85% or more of their total mass for propulsion-related activities. Therefore, the mission capability of a spacecraft is largely determined by the total amount of physical thrust. The efficiency of the propulsion system is determined by the total amount of the propellant and/or of the reactive mass it carries. When a spacecraft's stored propellant and/or reactive mass is exhausted, the ability to control the trajectory or maintain a precise location is no longer available. Without the ability to respond to external forces, the spacecraft ceases to be active and becomes space debris.

Since any conversion of energy from one form to another is accompanied by losses due to friction, radiation or conduction of heat, thermal electrical or mechanical hysteresis and the like, an approach is sought that increases the efficiency of generating forces that can be used to propel an object. It is important to create a technical method that eliminates the need to use stored propellant and/or reactive mass. Thus, vehicles such as, for example, spacecraft without being limited to them, using such systems and method can significantly reduce or even eliminate their dependence on stored fuel and/or reactive mass and fuel-based propulsion systems. If such progress is realized, the current ability to propel payloads will be significantly improved. The life of spacecraft and other devices and systems will be increased, and thus it will enable entirely new applications of such systems that were previously impossible. This would enable new systems and methods to be used for providing applied forces for many other cases. An example is propelling an object without the presence of a reaction.

### Background

The idea of using electric fields as a method of propulsion was previously explored in the 1920s by Thomas Townsend Brown ("Brown"). Brown discovered that a force was developed on a Coolidge tube when the tube was subjected to a high voltage. His electric field force effect is an electrical phenomenon that uses an electric field to generate applied forces that can be used, for example, to propel a spacecraft without running out of propellant.

According to U.S. Pat. No. 2,949,550 [Brown 1957] and 3,187,206 [Brown 1958], as an "electrokinetic" phenomenon, electrical energy can be converted to mechanical energy, which is then used to provide a force to move a structure. There are several patents describing propellant-free propulsion devices based on this effect, called the "Biefeld-Brown Effect", named after Brown and his school advisor, Dr. Paul Alfred Biefeld. These are US Pat. No. 2,949,550 [Brown 1957] and US Pat. No. 3,018,394 [Brown 1957a] and US Pat. No. 3,187,206 [Brown 1958]. Brown's colleague, A. H. Bahnson, filed a similar patent, US Pat. No. 2,958,790 [Bahnson 1958], as well as US Pat. No. 3,223,038 [Bahnson 1965] and US Pat. No. 3,227,901 [Bahnson 1966], using the effect.

Now-a-days the interest in these devices continues. In one configuration, two asymmetrical capacitors are arranged to rotate about a vertical axis, called the Asymmetrical Capacitor Thruster (ACT). Another common configuration involves one capacitor plate of a pair of capacitor plates positioned above its counterpart, arranged so that the device can be lifted off the ground. This device is called a lifter. Alexander Nikolaevich Prokofiev de Seversky investigated lifters in the 1960s with his "ionocraft" and filed a patent in the United States [Seversky, 1964]. De Seversky's device combined a series of wires perpendicular to a mesh plate to lift the device.

J. L. Naudin and others have constructed devices similar to Brown's original patent, and then assembled multiple devices into larger structures to create "lifters" that operate similarly to de Severski's device. These designs vary considerably in size and shape. Some consist of multiple individual components or consist of stacked layers of components to create more efficient and powerful devices. Other such devices are described in U.S. Pat. No. 6,492,784 of Hector Serrano [Serrano 2002], which generates the Bifeld Brown effect using asymmetric stacked-disc capacitors.

NASA, USA, has also investigated the use of Brown's invention. Jonathan Campbell of NASA's Marshall Space Flight Center has designed and tested ACTs that use dielectrics to increase their thrust, registering US patents for this work in 2001 and 2002, as disclosed in US Pat. No. 6,317,310, 6,411,493 and US Pat. No. 6,775,123 [Campbell 2001, 2002 and 2003].

Thomas Bahder and Chris Fazi [Bahder and Faze 2002] of the Army Research Laboratory (ARL) in Adelphi, MD have also published work on the subject. Numerous devices have been constructed, both original and reproductions to which qualitative modifications have been made. Their publication includes a brief history and an attempt to explain the cause of the observed force. In conclusion, it is noted that "The physical basis for the Biefeld-Brown effect is currently not understood."

An early test of this effect in vacuum was conducted by Robert Talley [Talley et al., 1991] of Veritay Technology in the late 1980s under contract to the Air Force. It includes a suspension of a spherical ACT disk on a thin string, and measuring the torsional forces. This allowed the measurement of small forces. The study is one of only two announced in the scientific literature about this effect describing force measurements in a vacuum chamber. Ultimately, the force observed was assumed to the electrostatic interaction between the chamber and the device. It was described as: "Direct experimental results show that under high vacuum conditions... no appreciable propulsive force is electrostatically induced by applying a static potential difference... between the electrodes of the test device..." It was concluded that "If such a force still exists and is below the threshold of measurement, then the force may be too small to be of interest for space propulsion applications." Although this study is indicative of the ability of these devices to produce power in a vacuum, it does not address the use of asymmetric capacitors.

A subsequent study was conducted by NASA to evaluate the technology. A comprehensive review of the current state of the art can be found in Canning, Francis X., Melcher, Cory, and Winet, Edwin, Asymmetrical Capacitors for Propulsion, Glenn Research Center of NASA (NASA/CR-2004-213312), Institute for Scientific Research, October 2004. This study demonstrated that most asymmetric capacitors (ACTs) exhibit zero thrust unless there is an accompanying "ion wind". Tests were conducted on cylindrical disk geometries under applied voltage in a vacuum bell jar. Observations indicated that no forces were produced under vacuum conditions. The conclusion noted that their operation was "fully explained by a very simple theory that uses only electrostatic forces and momentum transfer through multiple collisions".

Almost all of the patents described above involve an electrode at high voltage in air, the consequence of which is that the air becomes ionized as electrons are stripped from its gas molecules. Once the gas ions are charged, they will flow to the electrode with the opposite polarity as directed by the field. This current is known as corona current. These gas ions bombard other neutral gas ions, which in its turn causes a net gas motion typically ~1 m/s. Since this mechanism is due to an asymmetry of the electric field, there is only one direction of gas motion, emanating from the sharp electrode to the blunt electrode. The sharp electrode creates a locally higher electric field that ionizes the gas, while the blunt electrode reall y does ionize the gas. This asymmetry results in the direction of the wind, regardless of the polarity of the electrodes. In all cases, momentum is conserved, with a net ionic wind in one direction and the momentum of the asymmetric capacitor in the opposite direction. There are applications that take advantage of this effect, such as lifters. In 2018, Professor Stephen Barrett of the Massachusetts Institute of Technology conducted research demonstrating a horizontal aircraft flying across a gym with no moving parts using ionic thrust from the wind [Xu et al, 2018], which was presented at the Electrostatics Society of America conference.

Many of the above patents do not mention the effects of ionic wind, and the experimenters, including Brown, do not mention methods for mitigating this well-known effect. As a result, many authors who test asymmetric capacitors believe that the power they observe will have some use either in space or for large aircraft, both of which are impossible. Therefore, the current state of the art in using electrical energy to directly produce linear force and motion is through ionic wind propulsion or one of the two technologies mentioned below.

The most recent example of a propellant-free field propulsion system is an electromagnetic propulsion system, as disclosed in British Patents GB2229865, GB2334761, GB2399601 and UK Patent Application GB2537119 to Shawyer, as well as US Pat. No. 20140013724 to Fetta. This system includes an axially asymmetric resonant cavity with a conductive inner surface adapted to support a standing electromagnetic (EM) wave. The resonant cavity has no axial symmetry on the second axis, thus causing the standing EM wave to induce a net unidirectional force on the resonant cavity, thereby generating thrust without reactive mass. Experimental versions of these EM devices have been reported to produce micro-newton to milli-newton thrust levels from several kilowatts of input power (AIAA Journal of Propulsion and Power, op.cit).

Approaches to modifying the field for propellant-free propulsion include apparent reductions in gravitational mass or inertial mass. The method and apparatus described in US Pat. No. 3,626,605 to Wallace relate to the generation of a time-varying non-electromagnetic force field. It arises as a result of the relative motion of moving bodies composed of elements whose nuclei have half integral values of "spin". This force field displays itself in the form of an induced secondary gravitational force.

US Pat. No. 5,280,864 to Woodward in 1994 discloses a method for creating transient fluctuations in the inertial masses of material objects by exploiting an effect that is a consequence of relativistic theories of gravity. This patent is a continuation-in-part of US Pat. No. 07/521,992, filed in 1990 as a CIP of US Pat. No. 07/031,157, filed in 1987, as well as another application, US Pat. No. 6/919,647, filed in 1986, all now abandoned. The patent primarily uses high-frequency vibrating piezoelectric force transducers to accelerate a capacitor array while applying a high-frequency alternating current to electrically oscillating ions in dielectrics. The goal is to produce unidirectional forces via the relativistic Mach effect.

In subsequent patents U.S. Pat. No. 6,098,924, U.S. Pat. No. 6,347,766, and U.S. Pat. No. 9,287,840, Woodward disclosed various improvements to the device of U.S. Pat. No. 5,280,864 for generating thrust without propellant by using piezoelectric force transducers attached to resonant mechanical structures, in accordance with Mach's principle and local Lorentz-invariant predictions for transient rest mass fluctuations in accelerated objects. The device is designated a "Mach effect thruster". The latter patent U.S. Pat. No. 9,287,840 in 2016 incorporates acceleration and temperature feedback sensors into the electronics control system, uses a DC bias superimposed on high frequency AC voltages to activate the transducers, and applies pulsed AC waveforms. With these improvements, the device creates 6-7 µN of thrust at 100 W of input power, which is approximately 14 MW per 1 N. The disclosure acknowledges that the device is not scalable and that arrays of multiple small devices will be needed to generate larger thrusts.

In a publication for patent application US Pat. No. 2006/0065789, Woodward presents his "flux capacitor", which proposes modifications to the devices of US Pat. Nos. 5,280,864, 6,098,924 and 6,347,766 to overcome a serious intrinsic problem of velocity propagation. The force transducers are eliminated and the capacitor arrays are either enclosed in induction coils or the external induction coils are aligned with axes perpendicular to the displacement fields in the capacitor. The goal is to replace the accelerations of the transducer by using induction coils to generate perpendicular oscillations of the magnetic field of the dielectric ions.

None of the above-described systems or methods satisfy the stated need in the field of generating force without the presence of a reaction to provide a driving force to an object.

### TECHNICAL ESSENCE OF THE INVENTION

The aim of the present invention is to create a system and method for generating force without the presence of a reaction from a pressure difference applied to at least one closed thermodynamic two-phase system - liquid-gas in a closed volume by surfaces and capillary transport of the liquid phase to provide such applied forces.

In principle, the system and method of the invention satisfy the stated need in the field of generating a force without reaction, usable for any purpose, as an example and not by limitation, achieving acceleration or driving force without the use of any expelled propellant or any loss of mass. The system and method of the invention are based on a new and hitherto unknown aspect of the functioning of a thermodynamic two-phase system of the "heat pipe" type. In particular, the system is also based on a new method for determining the force balance of the arising internal pressures. A specific ratio of the parameters of the system, determined by this new method, generates a total resultant force on the system through imbalances between the internal and the capillary pressures in the closed conservative system. This resultant force of unbalanced internal pressure, by applying capillary pressure, has been thoroughly tested by the inventors and has been verified repeatedly in a laboratory environment, using various independent configurations for the system of the invention.

In accordance with the present invention, a "heat pipe" type system is included for transporting thermal energy from the hot to the cold end and, as a result of the selection of the parameters of the system, a resultant force is generated on the system, including a "pipe" type object with a microporous inner layer and a hermetically sealed inner volume comprising a liquid and a gas phase in thermodynamic equilibrium at each temperature and respective pressure in the closed volume, which comprises at least one hot end with a zone for evaporation of the fluid from the liquid to the gas phase, at least one heat-conducting adiabatic zone with a liquid phase in the microporous inner layer and gas phase and at least one cold condensation zone with a liquid and gas phase, wherein at least one heat source is applied to said at least one hot end with a zone for evaporation of the fluid from the liquid to the gas phase in a closed volume. The application of the heat source to the evaporation zone results in the fluid changing from a liquid to a gas phase, and the cooling of the gas phase in the cold condensation zone results in the fluid changing to a liquid phase, which creates an unbalanced pressure, relative to the total sum of the forces, acting on at least one surface of said object along the axis of the tube, thereby generating a total unbalanced force along the axis of the tube acting on it, without creating a reactive one. The force can be characterized as a vector resultant force without a corresponding reaction to balance it, acting on said object, a heat pipe, which in its functionality is used only as a heat conduction thermodynamic system. This well-known principle of heat pipes is used here in a specific design variant implemented by the method of this invention as a ratio of its parameters, to determine the necessary and correct ratio of the system parameters, in order to provide a completely different and novel design and use as a reactionless system.

### General operating principle of heat pipes

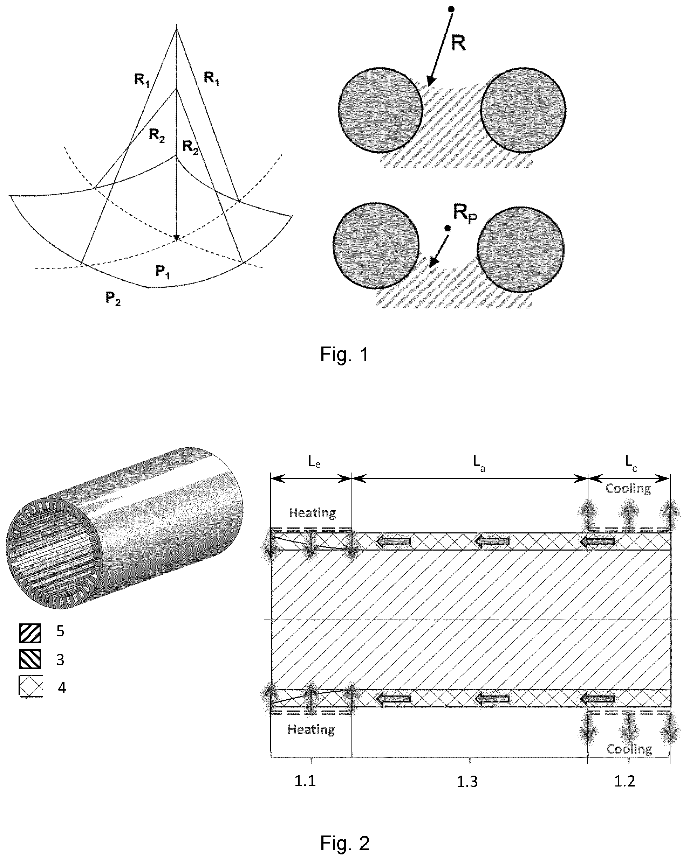

A typical use of a heat pipe (Fig. 2) is as follows: one end (evaporation zone) is connected to a heat source, and the opposite cold end (condensation zone) to a cooling medium, for example, a radiator. The middle section (adiabatic section) is insulated and operates without heating/cooling. As the liquid evaporates in the evaporation zone, the pressure of the resulting vapor forces it to flow axially along the central zone (adiabatic section) in the direction of the condensation zone. Upon reaching the cold end, the vapor condenses in the condensation zone and is "absorbed" by a porous structure that is filled with liquid phase due to the lower pressure of the liquid phase. The liquid is transported along the porous structure with capillary properties back to the evaporation zone driven by capillary force. The pressure difference between the gas and liquid phases is maintained by the surface tension force of the liquid in the capillary layer.

### Pressure specifics and heat pipe principle

The principle of heat pipe operation (Heat Pipe Design Handbook, NASA, Merilend 1997,
https://ntrs.nasa.gov/api/citations/19810065690/downloads/19810065690.pdf) is passive - no external mechanical pumping or suction is required. In this principle, waste heat provides the driving force for fluid flow through capillary forces in the porous part of the capillary bed. (Ku, Jentung, Introduction to Heat Pipes, https://tfaws.nasa.gov/wp-content/uploads/TFAWS2015-SC-Heat-Pipes.pdf).

### • Pressure balance in heat pipes

For the principle of operation of the heat pipe, it is important to determine the differential pressure across a curved active surface of a liquid (Fig. 1): $ΔP = {P}_{1} - {P}_{2} = σ \left(1/{R}_{1}+1/{R}_{2}\right) ,$ where:
σ - surface pressure;
P₁ - vapor pressure;
**P₂** - liquid pressure;
**R₁** and **R₂** - radii of curvature.

### • Pressure difference across the meniscus (distortion of the liquid surface due to surface pressure forces)

A meniscus will be formed at the liquid/vapor interface and capillary pressure will be developed: $Δ {P}_{CAP} = 2 σ cos θ / R ,$ where:
**θ** - is the contact angle

### • The maximal capillary pressure:

$Δ {P}_{CAP \left(max\right)} = 2 σ cos θ / {R}_{p} ,$ where:
**R ≥ Rₚ,**
**Rₚ** - pore radius.

### • Pressure balance in the heat pipe

The flow of fluid will cause a frictional pressure drop. The total pressure drop along the length of the heat pipe is the sum of the individual pressure drops. $Δ {P}_{TOTAL} = Δ {P}_{V} + {ΔP}_{L} + Δ {P}_{g}$ **where:**
**Δ Pᵥ** - vapor pressure differential;
**Δ P_{L}** - liquid pressure differential;
**Δ P_{g}** - weight pressure differential.

The meniscus will naturally curve so that the capillary pressure is equal to the total pressure drop. $Δ {P}_{CAP} = Δ {P}_{TOTAL}$ $Δ {P}_{CAP} = 2 σ cos θ / R , \left(R\geq R p\right)$

The flow will stop when the capillary limit is exceeded. $Δ {P}_{CAP \left(max\right)} = 2 σ cos θ / {R}_{p}$

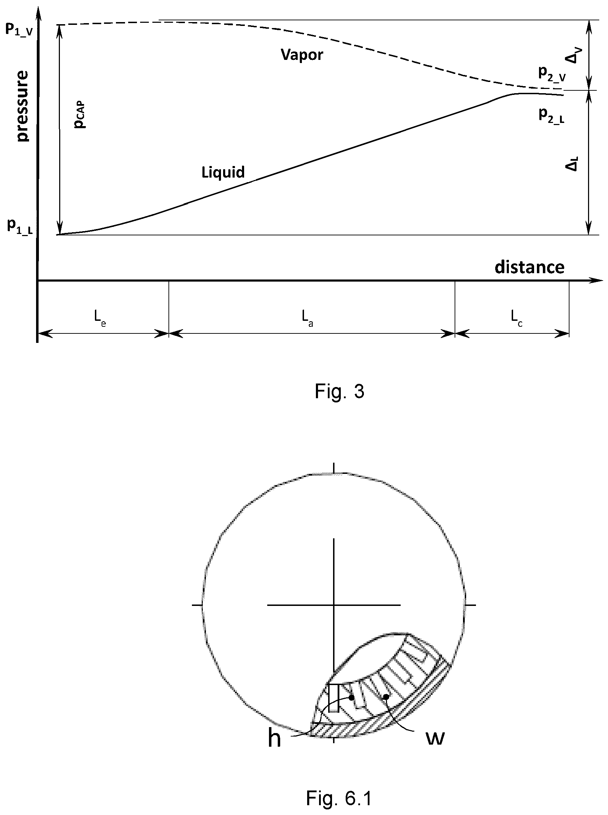

For normal operation it is necessary: $Δ {P}_{TOTAL} = Δ {P}_{CAP} \leq Δ {P}_{CAP \left(max\right)}$
- The pressure of the vapor decreases as it flows from the evaporator to the condenser.
- The pressure of the liquid decreases as it flows from the condenser to the evaporator due to capillary forces.
- At each cross-section of the heat pipe, there is a pressure difference between the gas and liquid phases. This **ΔP** is maintained by the surface tension force developed at the liquid/vapor interface at the tip of each groove or along the pores of the porous coating acting as a "wick".
- The lowest **ΔP** occurs at the very end of the condenser (zero), the highest **ΔP** occurs at the very end of the evaporator, see Fig. 3.

### • Heat Pipes - Heat Transfer Limit

For proper operation of a heat pipe, the total pressure drop must not exceed the capillary pressure. $Δ {P}_{TOTAL} \leq Δ {P}_{CAP \left(max\right)}$

The pressure at the wall of the heat source heating the liquid flow in the capillary medium is: $Δ {P}_{TOTAL} = Δ {P}_{V} + Δ {P}_{L} + Δ {P}_{g} ;$ ${ΔP}_{CAP \left(max\right)} = 2 σcosθ / {R}_{p} .$
- Capillary pressure: ${ΔP}_{CAP} ∝ 1 / {R}_{p} .$
- Liquid phase pressure drop: ${ΔP}_{L} ∝ 1 / {{R}_{p}}^{2} .$

### RESULTANT FORCE BALANCE

Based on the above dependencies, the following conclusions can be drawn:
- There is an optimal pore radius for maximum heat transfer.
- For different fluids and different capillary properties of the capillary coating (in one embodiment capillary grooves) a different capillary pressure and, accordingly, a different height of "pumping" against gravity is obtained.

The above-mentioned unbalanced pressure is further defined as the relative difference between the gas phase pressure acting on the reduced area of the hot end and the gas phase pressure acting on the reduced area of the cold end. The mentioned pressures have different pressure values and also act on different reduced areas. They form a difference in the resultant forces, whereby the reduced force acting on the hot end, projected as a vector along the longitudinal axis of the heat pipe, is relatively greater than the reduced force acting on the cold end, projected vector along the longitudinal axis of the heat pipe. The relative difference between the resultant forces acting on the hot and cold ends, projected vector along the longitudinal axis of the heat pipe, also gives a total resultant force in the direction of the hot end, without reaction in the closed thermodynamic system.

This is reflected in the force balance of the system. The two loads acting on the end surfaces of the hot and cold zone system are defined as follows: ${F}_{Z 2} = {p}_{2 _ v} * {A}_{2 _ V} + {p}_{2 _ L} * {A}_{2 _ L}$ ${F}_{Z 1} = {p}_{1 _ V} * \left({A}_{1 _ V 1}+{A}_{1 _ V 2}\right) + {p}_{1 _ L} * {A}_{1 _ L} .$ where:
**F_{Z1}** is a force acting on the warm bottom;
**F_{Z2}** is a force acting on the cold bottom;
**p_{1_V}** is the gas phase pressure in the evaporation zone;
**P_{1_L}** is the pressure of the liquid in the evaporation zone;
**p_{2_v}** is the gas phase pressure in the condensation zone;
**P_{2_L}** is the pressure of the liquid in the condensation zone;
**A_{1_V1} is** the projection of the area of the gas phase onto a plane perpendicular to the longitudinal axis of the enclosed volume in the evaporation zone;
**A_{1_V2}** is the projection of the area of the gas phase onto a plane perpendicular to the longitudinal axis of the enclosed volume in the evaporation zone in the capillary layer;
**A_{1_L}** is the projection of the liquid area onto a plane perpendicular to the longitudinal axis of the enclosed volume in the evaporation (heating) zone;
**A_{2_V}** is the projection of the area of the gas phase onto a plane perpendicular to the longitudinal axis of the enclosed volume in the condensation zone;
**A_{2_L}** is the projection of the liquid area onto a plane perpendicular to the longitudinal axis of the enclosed volume in the condensation zone.

Thus, the balance of forces in the system can be written as: ${F}_{Δ} = {F}_{Z 1} - {F}_{Z 2} = {p}_{1 _ V} * \left({A}_{1 _ V 1}+{A}_{1 _ V 2}\right) + {p}_{1 _ L} * {A}_{1 _ L} - {p}_{2 _ v} * {A}_{2 _ V} - {p}_{2 _ L} * {A}_{2 _ L}$

The terms of the above equation can be grouped as follows: ${F}_{Δ} = {F}_{Z 1} - {F}_{Z 2} = \left[{p}_{1 _ V}*\left({A}_{1 _ V 1}+{A}_{1 _ V 2}\right)-{p}_{2 _ v}*{A}_{2 _ V}\right] + \left[{p}_{1 _ L}*{A}_{1 _ L}-{p}_{2 _ L}*{A}_{2 _ L}\right] ,$ where:
- **A_{1_V1} = A_{2_V}** and according to Fig. 3 **p_{1_V} > p_{2_V},** which indicates that the first term of the equation **[p_{1_V}*(A_{1_V1} + A_{1_V2}) - p_{2_V}*A_{2_V}] > 0** has positive sign;
- **p_{1_L} < P_{2_L},** as well as **A_{1_L} < A_{2_L},** which indicates that the second term of the equation has a negative sign, i.e.: **[p_{1_L}*A_{1_L} - p_{2_L}*A_{2_L}] < 0.**

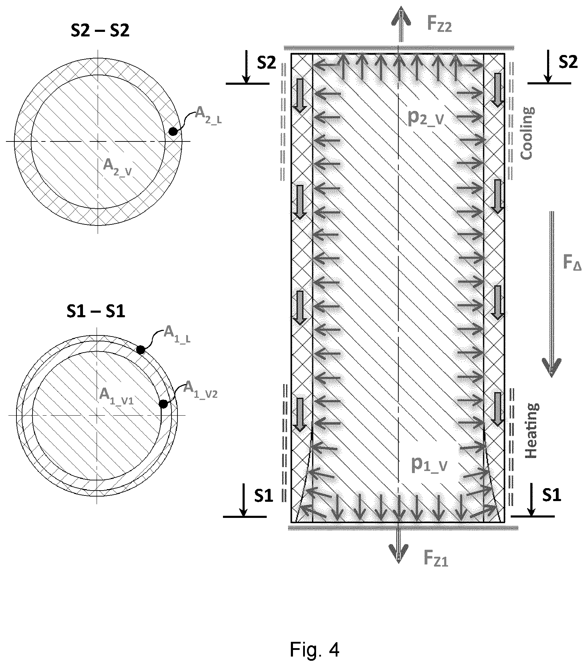

A detailed examination shows that the pressure (Fig. 3) in the vapor is greater than that in the liquid. Analysis of the geometry (Fig. 4) shows that the area over which the vapor pressure acts is greater than that over which the liquid pressure acts.

This leads to the reporting of a total unbalanced vector force acting along the axis of the system, in the direction of the hot end (evaporation zone) of the system.
**Method for generating a force from a pressure difference applied to at least one closed thermodynamic two-phase liquid-gas medium in a closed volume via surfaces and capillary transport of the liquid phase to provide a driving force to an object without the presence of a reaction**

The method of determining the presence of an unbalanced force is based on the following inequality: ${F}_{Z 1} > {F}_{Z 2} ,$ or as follows: $\left[{p}_{1 _ V}*\left({A}_{1 _ V 1}+{A}_{1 _ V 2}\right)-{p}_{1 _ L}*{A}_{1 _ L}\right] > \left({p}_{2 _ v}*{A}_{2 _ V}+{p}_{2 _ L}*{A}_{2 _ L}\right)$

When this inequality is satisfied, the presence of an unbalanced vector force acting along the axis of the system in the direction of the warm (evaporation zone) end of the system is guaranteed. The parameters of each implementation of such a system according to the proposed method must satisfy this requirement. The fulfillment of the inequality is determined by the ratios of the area of the tube A1 to the internal diameter without including the capillary layer, the thickness of the capillary layer and the length of the system, as well as the phase balance liquid/gas at different fluids and operating temperatures.

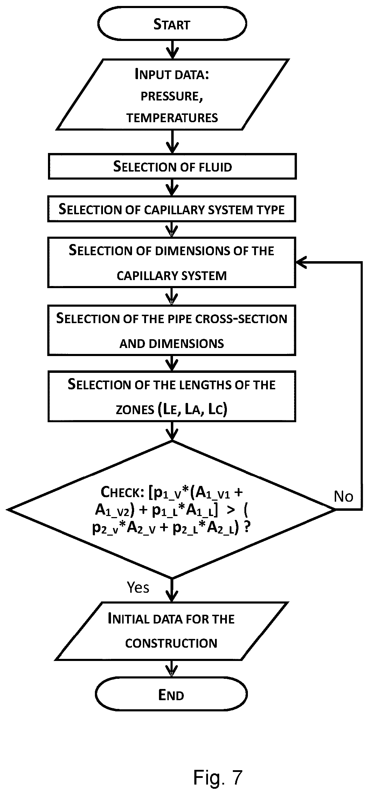

The sequence of implementation of the method is as follows (Fig. 7):
1. Selection of fluid as a function of the operating point of the heat pipe, in which we have a phase transformation at a correspondingly set pressure when encapsulating the system. The operating point is the temperature at which there is continuous evaporation and condensation and is determined by the fluid with which the heat pipe is filled;
2. Selection of the type of capillary system - capillary grooves, and/or pressed permeable material, and/or sintered permeable material, or other applicable material with capillary distances corresponding to ensuring the conditions for capillary transport;
3. Selection of the dimensions of the capillary system - thickness and length, depending on the selected type of capillary medium with certain capillary distances, corresponding to ensuring the conditions for capillary transport as a function of the surface pressure of the selected fluid;
4. Selection of the type of cross-section and dimensions, in one embodiment of a cylinder with a certain internal diameter of the tube. Tubes with other geometries are also possible, for example, prisms with a polygonal base, or other, different cross-sectional shapes (for example, curvilinear profiles);
5. Selection of the lengths of the warm zone/end, the length of the cold zone/end and the length of the intermediate (adiabatic) transport zone. These lengths are determined by the power that is introduced as energy into the system in the heating/evaporation zone, which is in balance with the power of the cooling/condensing zone, which is removed from the system;
6. Checking the fulfillment of the condition: $\left[{p}_{1 _ V}*\left({A}_{1 _ V 1}+{A}_{1 _ V 2}\right)-{p}_{1 _ L}*{A}_{1 _ L}\right] > \left({p}_{2 _ v}*{A}_{2 _ V}+{p}_{2 _ L}*{A}_{2 _ L}\right)$
7. In case of unsatisfactory results repeat the actions:
   item 2. Selection of capillary system onwards;
   item 3. Selection of dimensions of the capillary system - thickness and length, depending on the selected type of capillary medium with certain capillary distances;
   item 4. Selection of the type of cross-section and dimensions, in one embodiment of a cylinder with a certain internal diameter of the tube,
   in order to ensure the conditions for capillary transport as a function of the surface pressure of the selected fluid, until the desired system indicators are reached.

### System Variants:

- In one embodiment the shape and geometric arrangement of the conductive surfaces and the value of at least one unbalanced pressure can be defined by the computational methods according to the invention to achieve the desired net resultant force of the unbalanced pressure relative to the total vector sum of the forces acting on at least one surface of the object in the direction of the axis of the heat pipe.
- In one embodiment, the capillary conductive surface may be further defined as comprising a longitudinal grooved surface with groove dimensions dependent on the surface pressure coefficient of the liquid fluid. These grooves, longitudinal to the axis of the heat pipe, provide capillary transport (wicking function) for the liquid phase of the fluid towards the hot end of the heat pipe.
- In one embodiment, the capillary conductive surface may be further defined as comprising a sintered structure with open and permeable micro pores on a surface of non-zero thickness. The dimensions of the micro pores depend on the surface pressure coefficient of the liquid fluid and are such as to provide capillary transport of the liquid fluid (wick function) towards the hot end of the heat pipe.
- In one embodiment, the capillary conductive surface may be further defined as comprising a pressed network structure with open and permeable micro pores on a surface of non-zero thickness. The micro pore sizes of the pressed network structure depend on the surface pressure coefficient of the liquid fluid and are such as to provide capillary transport of the liquid fluid (wick function) towards the hot end of the heat pipe.
- In one embodiment, the method of the invention may be further defined as the net resultant axial force of the fluid pressures in its two phases, characterized as the vector sum of all pressure forces acting on said object.

### BRIEF DESCRIPTION OF THE FIGURES

The invention is explained in more detail with exemplary embodiments, not limiting the scope of protection, as well as through the attached figures, where:
Fig.1. Loads at the liquid/vapor interface in small gaps, where a depression (meniscus) is formed as a function of the surface pressure of the liquid fluid (source https://tfaws.nasa.gov/wp-content/uploads/TFAWS2015-SC-Heat-Pipes.pd).
Fig.2 Schematic diagram and operating principle of a heat pipe. Lengths of: evaporation zone (heating) - Le; adiabatic zone - La; condensation zone (cooling) - Lc.
Fig.3 Pressure distribution in the closed internal volume of a heat pipe between vapor and liquid, (source https://tfaws.nasa.qov/wp-content/uploads/TFAWS2015-SC-Heat-Pipes. pdf).
Fig.4 Scheme of the force vector balances.
Fig.5 Example implementation of the system and diagram of the components.
Fig.6.1 Dimensions and design options for an example implementation of the system.
Fig.6.2 Dimensions of the capillary conductive layer, including longitudinally formed grooves.
Fig.7 Block diagram of the method according to the invention.

### AN EXAMPLE OF IMPLEMENTATION AND INVENTION OPERATION

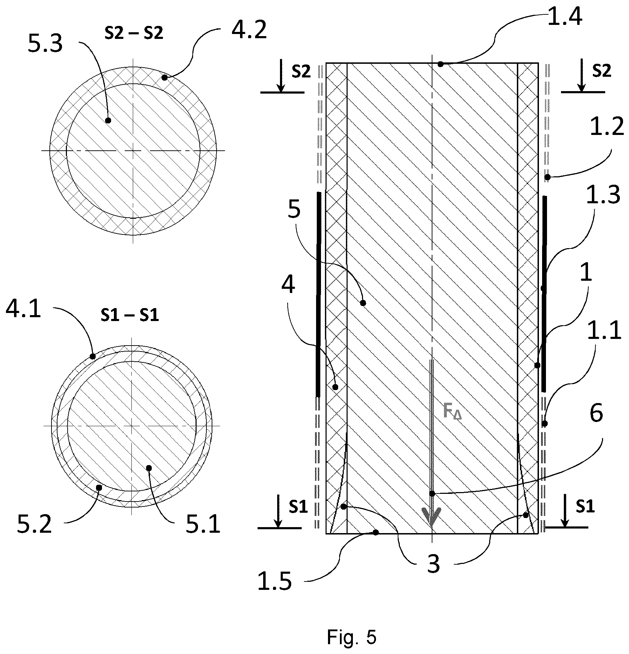

The system according to the invention, as shown in Fig. 5, has at least one hermetically sealed volume of at least one material wall 1 closed with material bottoms 1.4 and 1.5 and at least two or more opposite conductive surfaces of the material wall 1. Accordingly, the system has a warm conductive surface/hot end 1.1 and a cold conductive surface/cold end 1.2, which are connected with an adiabatic zone 1.3 of the walls of a certain length. On the inside of the closed volume of the system of at least one material wall 1, closed with at least two material bottoms 1.4 and 1.5, a material layer with a non-zero thickness 3 and conductive geometric characteristics for liquids with capillary properties is formed. The interior of the hermetically sealed volume of the system of walls 1 and bottoms 1.4 and 1.5 and without any exchange with the environment, is filled with a working fluid in liquid phase 4 and in gaseous phase (steam) - 5.

The closed volume in the given example of the figures is a cylindrical tube with a circular cross-section and two ends. In other embodiments, the cross-section of the tube may be elliptical or polygonal. It is also possible for the closed volume to have several ends and to have complex outlines, for example, it may have a Y-shape or T-shape with two hot or two cold ends, or a double Y-shaped or T-shaped, with two hot and two cold ends.

According to the invention, the system may also include several closed volumes, for example, connected in parallel.

### Mode of operation of the system according to the invention

When heat energy is supplied to the surface of the warm end 1.1 of the hermetically sealed volume of the conservative thermodynamic system consisting of a hermetically sealed volume with walls 1 and bottoms 1.4 and 1.5, without any exchange with the environment, evaporation of the charged encapsulated fluid begins in the evaporation zone. This leads to an increase in the pressure inside the hermetically sealed volume and the vapor begins to move towards the cold end 1.2. Upon reaching this zone, due to the lower temperature of the cold surface, the temperature of the encapsulated gas phase decreases. Upon reaching the condensation point, which is a function of the temperature, pressure, and type of fluid 4, it begins to liquefy and, due to the surface pressure of the liquid phase, is absorbed by the surface of the capillary layer under the action of capillary pressure. The liquid phase absorbed in the capillary layer 3 under the action of the capillary pressure, which is higher in the cold end 1.2 (see Fig. 3), begins to move through the capillary layer in the intermediate adiabatic zone 1.3 to the warm end 1.1 of the system, where the pressure continuously decreases. In the evaporation zone/warm end 1.1, the liquid phase 4 that has reached the high temperature due to the incoming amount of energy begins to evaporate again, and thus the process described above is repeated cyclically. This cycle is driven by the incoming energy in the warm end/evaporation zone 1.1 of the system and the released energy in the cold end/condensation zone 1.2. As a result, the movement is determined by the drops of the pressures and reaching in the zones, respectively, of the warm bottom 1.4 values **p_{1_L}, p_{1_V}** and at the cold bottom 1.5, values **p_{2_V}, p_{2_L},** and the corresponding projections of the areas - **A_{1_V1} (5.1), A_{1_V2}** (5.2) and **A_{1_L}** (4.1) for the warm bottom 1.4 in the direction of the axis of the closed volume, and, respectively, the projections of the areas **A_{2_V} (4.2)** and A_{2_L} (5.3) in the direction of the axis of the closed volume to the cold bottom 1.5. The two forces acting on the projection of the fronts are determined by the dependencies defined above, according to Fig. 4, as follows: ${F}_{Z 2} = {p}_{2 _ V} * {A}_{2 _ V} + {p}_{2 _ L} * {A}_{2 _ L}$ ${F}_{Z 1} = {p}_{1 _ V} * \left({A}_{1 _ V 1}+{A}_{1 _ V 2}\right) + {p}_{1 _ L} * {A}_{1 _ L}$

Thus, the resultant vector of the vector sum of all forces acting on the system (the mutually balancing components of the forces in the other directions of the closed system are not indicated here) along the axis of the closed volume of the system can be written as: ${F}_{Δ} = {F}_{Z 1} - {F}_{Z 2} = {p}_{1 _ V} * \left({A}_{1 _ V 1}+{A}_{1 _ V 2}\right) + {p}_{1 _ L} * {A}_{1 _ L} - {p}_{2 _ v} * {A}_{2 _ V} - {p}_{2 _ L} * {A}_{2 _ L}$

Applying the method discussed above, to determine the presence of an unbalanced force F_{Δ}, the following inequality applies: ${F}_{Z 1} > {F}_{Z 2} ,$ or **as follows:** $\left[{p}_{1 _ V}*\left({A}_{1 _ V 1}+{A}_{1 _ V 2}\right)+{p}_{1 _ L}*{A}_{1 _ L}\right] > \left({p}_{2 _ v}*{A}_{2 _ V}+{p}_{2 _ L}*{A}_{2 _ L}\right)$

When this inequality is satisfied, the presence of an unbalanced vector force or so-called unbalanced pressure is guaranteed: ${F}_{Δ} = {F}_{Z 1} - {F}_{Z 2} ,$ acting along the axis of the system, in the direction of the warm end (evaporation zone) 1.1 of the closed thermodynamic system 1, consisting of a closed hermetic volume of the system of walls 1 and bottoms 1.4 and 1.5. At a certain ratio of the parameters it is possible, but not effective, to obtain a resultant force in the opposite direction. The parameters of each implementation of such a system according to the proposed method satisfy the above requirement for: ${F}_{Δ} = FZ 1 - FZ 2 .$

At least one unbalanced resultant force said above, which is further defined as a relative difference between ${F}_{Δ} = {F}_{Z 1} - {F}_{Z 2} = {p}_{1 _ V} * \left({A}_{1 _ V 1}+{A}_{1 _ V 2}\right) + {p}_{1 _ L} * {A}_{1 _ L} - {p}_{2 _ v} * {A}_{2 _ V} - {p}_{2 _ L} * {A}_{2 _ L}$ provides a resultant force **F_{Δ},** without reaction in the closed thermodynamic system 1 consisting of a closed hermetically sealed volume of the system of walls 1 and bottoms 1.4 and 1.5.

### An example of a design solution

An example of a non-limiting embodiment of the system is schematically shown in Fig. 5.

To demonstrate a particular embodiment of the system, non-limiting example of specific dimensions of the cylindrical shape, as well as of the system hermetically sealed volume are given in Fig. 5.

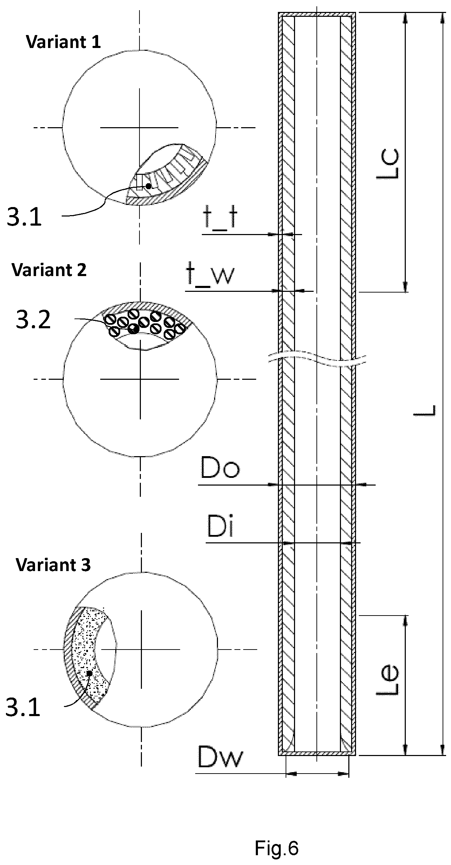

To determine the limits of applicability of the method in creating devices of various applications (propulsion of satellites and other space objects), possible application limits of the main parameters of the system design schemes have been determined as follows:
- Radial dimensions:
   o Outer diameter of the tube: Do = 5÷50 mm
   o Inner diameter of the capillary layer: Di = 2.5÷45 mm
   o Outer diameter of the gas phase contact in the heating section: Dw = 4.4÷47 mm
   o Thickness of the capillary layer: t_w = 0.5÷7.5 mm
- Axial dimensions:
   o Total pipe length: L = 250÷1000 mm
   o Heater length (heating zone), expressed as a ratio to the total pipe length: Le/L = 0.1÷0.45
   o Condenser length (cooling zone), expressed as a ratio to the total pipe length: Lc/L = 0.1÷0.45
- Parameters of the capillary conduction volume:
   o When implementing the capillary conduction volume, including longitudinally formed grooves (figure 6.1), with dimensions:
      - Groove depth: h = (0.25+0.75)*t_w
      - Groove width: w = (0.2+0.35)*h

### System implementations:

- According to the invention, based on the shape and geometric arrangement of the conductive surfaces 1.1, 1.2, 1.3 and the capillary surface 3 determining the respective projections of the areas - A_{1_V1} (5.1), A_{1_V2} (5.2) and A_{1_L} (4.1) for the warm bottom 1.1 in the direction of the axis of the closed volume and, respectively, the projections of the areas A_{2_V} (4.2) and A_{2_L} (5.3), the values of the working pressures p_{1_L}, p_{1_V}, as well as the values p_{2_V}, P_{2_L} can be defined by the proposed calculation method to achieve the desired net resultant force of unbalanced pressure relative to the total vector sum of the forces acting on at least one surface of the said closed volume of the system in the direction of the axis of the heat pipe.
- In one embodiment, the capillary conductive layer 3 can be further defined as comprising a longitudinal grooved surface 3.1, Fig. 6, with groove dimensions depending on the surface pressure coefficient of the liquid fluid. These grooves 3.1, which are longitudinal to the axis of the closed volume, provide capillary transport (wick function) for the liquid phase 4 of the fluid in the direction of the hot end of the heat pipe 1.1.
- In one embodiment, the capillary conductive layer 3 can be further defined as comprising a sintered structure with open and permeable micropores 3.2, Fig. 6. The dimensions of the permeable micropores 3.2 depend on the surface pressure coefficient of the liquid phase 4 of the charged fluid and are such as to ensure capillary transport of the liquid phase 4 (wick function) through the capillary layer in the direction of the hot end 1.1 of the closed volume system.
- In one embodiment, the capillary conductive layer 3 may be further defined as comprising a pressed network structure with open and permeable micropores 3.3, Fig. 6. The dimensions of the permeable micropores depend on the surface pressure coefficient of the liquid phase 4 of the charged fluid and are such as to ensure capillary transport of the liquid phase 4 (wick function) through the capillary permeable microporous structure in the direction of the warm end 1.1 of the closed volume system.

### Examples of system implementation

In the examples the pressure values are calculated for the specific fluids using well-known formulas in fluid thermodynamics.

**The first example** of a variant of the system for operation at the temperature of the Earth's surface (5 to 80 C) has the following main parameters:
- Pipe material - copper
- Working fluid - water
- Outer diameter of the pipe: Do = 10 mm
- Inner diameter of the capillary layer: Di = 6 mm
- Outer diameter of the gas phase contact in the heating zone: Dw = 8.1 mm
- Pipe wall thickness: t_t = 0.5 mm
- Capillary layer thickness: t_w = 1.5 mm
- Pipe length: L = 500 mm
- Heater length (heating zone): Le = 100 mm
- Condenser length (cooling zone): Lc = 200 mm

According to these dimensions, the following pressure action areas on the upper and lower surfaces of the tube were calculated:
- Area of the gas phase in the heating/evaporation zone: A1_V1 = A_{1_V1} = π*(Di/2)² = 28,27 mm²;
- Area of the gas phase in the heating/evaporation zone in the capillary layer: A_{1_V2} = π*(Dw/2)² - π*(Di/2)² = 23,26 mm²;
- Area of the liquid in the heating/evaporation zone: A_{1_L} = π*((Do-2*t_t)/2)² - π*(Dw/2)² = 12,09 mm²;
- Area of the gas phase in the condensation (cooling) zone: A_{2_V} = A_{1_V1} = π*(Di/2)² = 28,27 mm²;
- Area of the liquid in the condensation zone (cooling): A_{2_L} = π*((Do-2*t_t)/2)² - π*(Di/2)² = 35,34 mm².

The values of the acting pressures on the corresponding areas are as follows:
- Gas phase pressure in the evaporation (heating) zone p_{1_V} = 110; kPa;
- Liquid pressure in the evaporation (heating) zone p_{1_L} = 96 kPa;
- Gas phase pressure in the condensation (cooling) zone p_{2_V} = 107 kPa;
- Liquid pressure in the condensation (cooling) zone P_{2_L} = 105 kPa.

The determination of the two loads acting on the faces is carried out based on the above-mentioned values as follows:
- Force on the face in the evaporation (heating) zone FZ1 = 6,82 N;
- Force on the face in the condensation (cooling) zone FZ2 = 6.73 N;
- Unbalanced force FΔ = 0.092 N.

With these sample values of p_{1_L}, p_{1_V}, and respectively p_{2_V}, P_{2_L} values and the corresponding projections of the areas - A_{1_V1} (5.1), A_{1_V2} (5.2) and A_{1_L} (4.1) for the warm bottom 1.1 in the direction of the axis of the closed volume and respectively the projections of the areas A_{2_V} (4.2) and A_{2_L} (5.3) in the direction of the axis of the closed volume 1 towards the cold bottom 1.2, an unbalanced force FΔ of 0.092 N is obtained. This is also the usable driving force.

A second sample of a design variant of the system for operation in space conditions (temperature - 200 to -160 C) has the following basic parameters:
- Tube material: Copper;
- Working fluid: Nitrogen
- Outer diameter of the tube: Do = 6 mm;
- Inner diameter of the capillary layer: Di = 5 mm;
- Outer diameter of the gas phase contact: Dw = 5.6 mm;
- Tube wall thickness: t_t = 0.5 mm;
- Capillary layer thickness: t_w = 0.2 mm;
- Tube length: L = 200 mm;
- Heater length (heating zone): Le = 15 mm;
- Condenser length (cooling zone): Lc = 65 mm;
- Groove depth: h = 0.20 mm;
- Groove width: w = 0.27 mm;
- Number of grooves: n = 50;
- Steam filling coefficient of the grooves in the warm zone: c = 0.75n

According to these dimensions the following pressure areas on the upper and lower surfaces of the pipe have been calculated:
- Area of the gas phase in the evaporation (heating) zone A_{1_V1} = π*(Di/2)² = 16.62 mm²;
- Area of the gas phase in the evaporation (heating) zone in the capillary layer A_{1_V2} = c*n*h*w = 2.03 mm²;
- Area of the liquid in the evaporation (heating) zone A_{1_L} = (1-c)*n*h*w = 0.68 mm²;
- Area of the gas phase in the condensation (cooling) zone A_{2_V} = A_{1_V1} = π*(Di/2)² = 16.62 mm²;
- Area of the liquid in the condensation (cooling) zone A_{2_L} = n*h*w = 2.70 mm².

The values of the acting pressures on the corresponding areas are as follows:
- Gas phase pressure in the evaporation (heating) zone p1_V = 326; kPa
- Liquid pressure in the evaporation (heating) zone p1_L = 236 kPa;
- Gas phase pressure in the condensation (cooling) zone p2_V = 307 kPa;
- Liquid pressure in the condensation (cooling) zone p2_L = 286 kPa;

The determination of the two loads acting on the faces is carried out based on the above-mentioned values as follows:
- Force on the face in the evaporation (heating) zone: FZ1 = 6.237 N;
- Force on the face in the condensation (cooling) zone: FZ2 = 5.874 N;
- Unbalanced force: FΔ = 0.363 N.

With these values of p_{1_L}, p_{1_V} and the values p_{2_V}, P_{2_L}, the corresponding projections of the areas - A_{1_V1} (5.1), A_{1_V2} (5.2) and A_{1_L} (4.1) for the warm bottom 1.1 in the direction of the axis of the closed volume and, respectively, the projections of the areas A_{2_V} (4.2) and A_{2_L} (5.3) in the direction of the axis of the closed volume 1 to the cold bottom 1.2 an unbalanced resultant force FΔ of 0.363 N is obtained. This is also the required driving force.

### References

WO2020159603A2, System and method for generating forces using asymmetrical electrostatic pressure,
   https://patentimages.storage.qoogleapis.com/b2/20/c9/debfife0819d2c/US1151189 1B2.pdf
FI93580C 1995-04-25 Vaisala Oy Method and apparatus for feedback of an asymmetric pressure differential sensor
WO1999035893A2 1999-07-15 The University Of Tennessee Research CorporationParaelectric gas flow accelerator
CN1330806A 2002-01-09 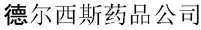 Electrostatic sensing chuck using area matched electrodes
US6974110B2 2005-12-13 Peter GrandicsMethod and apparatus for converting electrostatic potential energy
US6411493B2 2002-06-25 The United States Of America As Represented By The Administrator Of The National Aeronautics And Space AdministrationApparatus for generating thrust using a two dimensional, asymmetrical capacitor module
US7182295B2 2007-02-27 Scott D. RedmondPersonal flight vehicle and system
US7649671B2 2010-01-19 Qualcomm Mems Technologies, Inc.Analog interferometric modulator device with electrostatic actuation and release
JP2008129601A 2008-06-05 Lg Electronics Inc Electro-optic modulator assembly for contactless test of flat panel display, device and method for contactless test of flat panel display using the same and method for manufacturing flat panel display using the method
US20150252795A1 2015-09-10 Michael Junior Spruill Electrostatic Thruster
US11724831B2 2023-08-15 Robert Bado Electromagnetic spacetime continuum propulsion system for space travel
US11818829B2 2023-11-14 Glen A. Robertson Method for creating a rapidly changing energy shell of quantum fluctuations about masses for acceleration without mass ejection
US10006446B2 2018-06-26 Electromagnetic segmented-capacitor propulsion system
Shinohara 2018 Helicon high-density plasma sources: physics and applications
US10513353B2 2019-12-24 Segmented current magnetic field propulsion system
US10135323B2 2018-11-20 Capacitive-discharge electromagnetic propulsion system
US11511891B2 2022-11-29 System and method for generating forces using asymmetrical electrostatic pressure
EP1941601A2 2008-07-09 Electromagnetic thrust system
Stone et al. 1999 The TSS-1R electrodynamic tether experiment: Scientific and technological results
Buehler 2004 Exploratory research on the phenomenon of the movement of high voltage capacitors
WO2009025674A2 2009-02-26 Fifth-force apparatus and method for propulsion
US20230121805A1 2023-04-20 System and method for generating forces using asymmetrical electrostatic pressure
US20240011469A1 2024-01-11 System and method for generating forces using asymmetrical electrostatic pressure
US20120092107A1 2012-04-19 Propulsion system using the antigravity force of the vacuum and applications
WO2007037980A2 2007-04-05 System, apparatus, and method for increasing particle density and energy by creating a controlled plasma environment into a gaseous media
Lobo et al. 2022 Advanced Topics in Contemporary Physics for Engineering: Nanophysics, Plasma Physics, and Electrodynamics
Tajmar et al. 2015 Particles with negative mass: production, properties and applications for nuclear fusion and self-acceleration
US20050269996A1 2005-12-08 System, apparatus, and method for generating force by introducing a controlled plasma environment into an asymmetric capacitor
Nakamura et al. 2011 Experimental Investigation of Plasma Acceleration by Rotating Electric Field for Electrodeless Plasma Thruster
US20160254737A1 2016-09-01 Electromagnetic Angular Acceleration Propulsion System
Leng et al. 2021 Electrohydrodynamic thrust with no combustion emissions and noises in a centimeter-scale point-to-grid configuration
Stone et al. 2002 A preliminary assessment of grid spheres used as end-body electrodes for electrodynamic tethers
Omidi et al. 2003 Electrostatic plasma sail (EPS)
Musha 2009 Possibility of the Space Propulsion System Utilizing the ZPF Field
Moon et al. 2024 Plume simulation of atmosphere-breathing electric propulsion system
Comstock et al. 2025 External Plasma-Breathing Magnetohydrodynamic Spacecraft Propulsion
Ragav et al. 2021 Performance study of electrohydrodynamic thruster under the influence of external magnetic fields
Heat Pipe Design Handbook, NASA, Merilend 1997, https://ntrs.nasa.gov/api/citations/19810065690/downloads/19810065690.pdf
Ku, Jentung, Introduction to Heat Pipes, NASA, 2014
https://tfaws.nasa.qov/wp-content/uploads/TFAWS2015-SC-Heat-Pipes.pdf

## Claims

1. A system for generating a driving force towards an object, without the presence of a reaction and loss of mass, comprising at least one closed thermodynamic two-phase liquid-gas system in a closed volume without material exchange with the environment, **characterized in that** the at least one closed volume consists of at least one material wall (1) closed with material bottoms (1.4 and 1.5), wherein the material wall forms at least two opposite sides with thermally conductive surfaces adjacent to the material bottoms, respectively, a warm end with a warm bottom (1.4), defining an evaporation zone (1.1), and a cold end with a cold bottom (1.5), defining a condensation zone (1.2), connected with an intermediate adiabatic zone (1.3), the longitudinal axis of the closed volume extending between the evaporation and condensation zones, wherein on the inner side of the at least one material wall (1) of the closed volume of the system there is a layer (3) with geometric characteristics providing capillary conductivity properties for liquids with a corresponding surface pressure, wherein the interior of the hermetically sealed volume of the system is filled with a working fluid in liquid phase (4) and in gaseous phase (5), in which the system is configured so that under the action of a thermodynamic cycle for transferring heat flow from the hot end to the cold end through the adiabatic zone (1.3), by means of evaporation of the working fluid in the evaporation zone (1.1), passage of the gaseous phase through the adiabatic zone to the condensation zone (1.2), where condensation of the working fluid takes place and return of the liquid phase to the hot end through the layer with capillary properties for the selected working fluid under the influence of capillary forces, the relative difference of vector forces is created, which determines at least one unbalanced resultant force FΔ, and which is further defined as a relative difference between forces acting on the hot FZ1 and cold FZ2 ends, projected vectorially along the longitudinal axis of the closed volume, whose vector sum gives a total unbalanced resultant force in the direction of the warm end: ${F}_{Δ} = {F}_{Z 1} - {F}_{Z 2} = {p}_{1 _ V} * \left({A}_{1 _ V 1}+{A}_{1 _ V 2}\right) + {p}_{1 _ L} * {A}_{1 _ L} - {p}_{2 _ v} * {A}_{2 _ V} - {p}_{2 _ L} * {A}_{2 _ L} ,$ where the condition is met: ${F}_{Z 1} > {F}_{Z 2}$ where:
F_{Z1} is the force acting on the hot bottom;
**F_{Z2}** is the force acting on the cold bottom;
**p_{1_V}** is the pressure of the gas phase in the evaporation zone;
**p_{1_L}** is the pressure of the liquid in the evaporation zone;
**p_{2_V}** is the pressure of the gas phase in the condensation zone;
**p_{2_L}** is the pressure of the liquid in the condensation zone;
**A_{1_V1}** is the projection of the area of the gas phase onto a plane perpendicular to the longitudinal axis of the enclosed volume in the evaporation zone;
**A_{1_V2}** is the projection of the area of the gas phase onto a plane perpendicular to the longitudinal axis of the enclosed volume in the evaporation zone in the capillary layer;
**A_{1_L}** is the projection of the area of the liquid onto a plane perpendicular to the longitudinal axis of the enclosed volume in the evaporation zone;
**A_{2_V}** is the projection of the area of the gas phase onto a plane perpendicular to the longitudinal axis of the enclosed volume in the condensation zone;
**A_{2_L}** is the projection of the area of the liquid on a plane perpendicular to the longitudinal axis of the enclosed volume in the condensation zone,
without the presence of a reaction in the considered closed thermodynamic system of the closed volume.

2. A system according to claim 1, **characterized in that** the capillary conductive layer (3) is composed of a plurality of parallel to each other longitudinal grooves (3.1) with groove dimensions corresponding to the surface pressure coefficient of the respective liquid fluid to ensure capillary transport for the liquid phase (4) of the fluid in the direction towards the warm end (1.1) of the closed volume system.

3. A system according to claim 1, **characterized in that** the capillary conductive layer (3) is a sintered structure with open and permeable micropores (3.2), the dimensions of the micropores corresponding to the surface pressure coefficient of the liquid phase (4) of the charged fluid to ensure capillary transport of the liquid phase (4) through the capillary layer in the direction towards the warm end of the closed volume system.

4. A system according to claim 1, **characterized in that** the capillary conductive layer comprises a pressed network structure with open and permeable micropores (3.3), the dimensions of the permeable micropores corresponding to the surface pressure coefficient of the liquid phase (4) of the charged fluid to ensure capillary transport of the liquid phase (4) through the capillary permeable microporous structure in the direction towards the warm end of the closed volume system.

5. A method for generating an unbalanced force in a closed system without loss of mass, the closed system being at least one closed thermodynamic two-phase liquid-gas system in a hermetically sealed volume without material exchange with the environment, said method comprising the following steps:
- Providing at least one hermetically sealed volume, without any exchange with the environment, consisting of at least one material wall (1) closed with material bottoms (1.4, 1.5), wherein the material wall forms at least two opposite sides with thermally conductive surfaces adjacent to the material bottoms, respectively, a warm end with a warm bottom (1.4), defining an evaporation zone (1.1), and a cold end with a cold bottom (1.5), defining a condensation zone (1.2), connected with an intermediate adiabatic zone (1.3), wherein on the inner surface of the at least one material wall there is a layer with geometric characteristics providing capillary properties for conduction for liquids with a corresponding surface pressure;
- Filling the hermetically sealed volume of the system with a working fluid in liquid phase (4) and in gaseous phase (5), selected depending on the temperature conditions under which the system will operate;
- Ensuring a temperature difference between the two sides of the hermetically sealed volume, consistent with the temperature characteristics of the working fluid, by heating and/or cooling, respectively, the hot end and/or the cold end, thereby creating a thermodynamic cycle for transferring heat flow from the hot end to the cold end through the adiabatic zone (1.3) by evaporating the working fluid in the evaporation zone (1.1), passing the gaseous phase through the adiabatic zone to the cold end, where condensation of the working fluid takes place in the condensation zone (1.2) and returning the liquid phase to the hot end through the layer with capillary properties for the selected working fluid under the influence of capillary forces;
- Creation as a result of heat transfer of an unbalanced resultant vector force FΔ, which is additionally defined as the relative difference between forces acting on the hot and cold ends, projected vectorially along the longitudinal axis of the closed volume, the vector sum of which gives a total unbalanced resultant force **F_{Δ}** in the direction of the hot end, according to the following formula: ${F}_{Δ} = {F}_{Z 1} - {F}_{Z 2} = {p}_{1 _ V} * \left({A}_{1 _ V 1}+{A}_{1 _ V 2}\right) + {p}_{1 _ L} * {A}_{1 _ L} - {p}_{2 _ v} * {A}_{2 _ V} - {p}_{2 _ L} * {A}_{2 _ L} ,$ where the condition ${F}_{Z 1} > {F}_{Z 2}$ is met and the notations are according to claim 1,
without presence of a reaction in the considered closed thermodynamic system of the closed volume.
